# EUROPEAN PATENT SPECIFICATION

(11) **EP 1 456 554 B1**
(45) Date of publication and mention of the grant of the patent: **01.03.2006**
(21) Application number: 02793669.9
(22) Date of filing: 16.12.2002
(51) Int. Cl.: F16D 65/21, F16D 65/54

(54) **A PARKING BRAKE ARRANGEMENT IN AN ELECTRICALLY OPERATED BRAKE**
FESTSTELLBREMSANORDNUNG IN EINER ELEKTRISCH BETRIEBENEN BREMSE
MECANISME DE FREIN DE STATIONNEMENT CONTENU DANS UN FREIN A COMMANDE ELECTRIQUE

(30) Priority: 18.12.2001 SE 0104279
(43) Date of publication of application: 15.09.2004
(73) Proprietor: Haldex Brake Products AB, 261 24 Landskrona (SE)
(72) Inventor: SEVERINSSON, Lars, S-310 21 Hishult (SE)
(74) Representative: Petri, Stellan
(86) International application number: PCT/SE2002/002363
(87) International publication number: WO 2003/052286

(56) References cited:
- DE-A1- 19 851 668
- DE-A1- 19 908 062
- DE-C1- 19 744 356
- US-A- 5 004 077
- US-A- 5 829 845

## Description

### Technical Field

The present invention relates to a parking brake arrangement in an electrically operated brake, in which a rotary movement of an electric motor is transformed into a translational brake applying movement.

### Background of the Invention

There is a tendency to employ an electric drive motor as the means for operating a brake actuator for a vehicle. In the present case this electric motor is used for operating a disc brake, especially but not exclusively for a heavy road vehicle, such as a truck, trailer, or bus. This disc brake contains means for transforming the rotational movement of the electric motor into a translational movement of a brake pad, see for example DE-A-19851668.

The electric motor can be used not only for service braking but also for parking braking. In the latter case the brake is applied by the electric motor to a force which is suitable for safely holding the vehicle in the parked position and is held in this applied condition.

A problem may, however, be encountered in that the brake disc and certain portions of the disc brake may have been heated to considerable temperatures during the preceding service braking. When the heated members gradually cool off and return to normal size after their heat expansion, the parking brake force may decrease to such a level that the safe parking braking may be jeopardized.

### The Invention

The problem of ensuring a satisfactory parking braking when the heated members cool off may according to the inventionbe solved by an elasticity spring, which is so arranged in the force transmitting chain that its elasticity is in series with the elasticity of the brake and is adapted to provide a rotary parking brake force.

The elasticity spring is preferably loaded at a service brake application of the brake and then locked until released for parking brake application.

A practical embodiment is characterized in that a transmission sleeve rotatably biased by the elasticity spring is rotatably arranged in the rotary force transmitting chain in the housing of the brake and is held to the housing at service braking but is disengaged therefrom at parking braking.

Hereby, the force of the elasticity spring is transmitted via the transmission sleeve to the brake pad only at parking braking. The elasticity spring may provide a force which is suitable for parking braking.

For practically accomplishing the engagement and disengagement of the transmission sleeve there is a locking rod, which is arranged in the housing for engagement with the transmission sleeve by means of an electromagnet and disengagement therefrom by means of a compression spring.

The elasticity spring may either be a compression spring connected to the transmission sleeve by means of a sleeve arm or a clock spring or spiral spring arranged in the housing with its outer end attached to the housing and its inner end attached to the transmission sleeve.

### Brief Description of the Drawings

The invention will de described in further detail below under reference to the accompanying drawings, in which
Fig 1 is a sectional side-view and Fig 2 is a section along the line II-II in Fig 1 of a first embodiment of an electric disc brake according to the invention,
Fig 3 is a sectional side-view and Fig 4 is a section along the line IV-IV in Fig 3 of a second embodiment of an electric disc brake according to the invention, and
Fig 5 is a sectional side-view and Fig 6 is a section along the line VI-VI in Fig 5 of a third embodiment of an electric disc brake according to the invention.

### Detailed Description of Embodiments

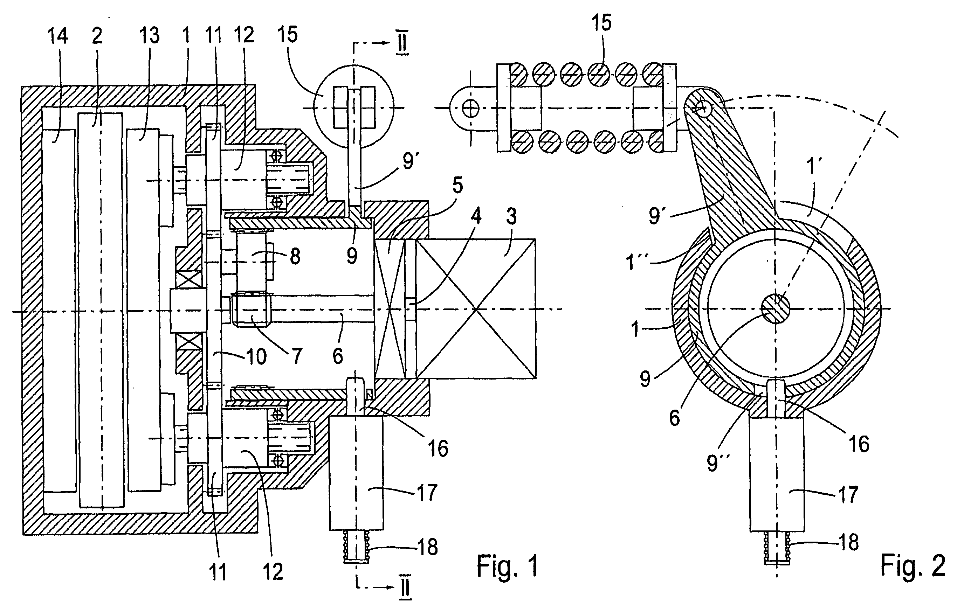

### The first embodiment according to Figs 1 and 2

A disc brake according to the invention is very schematically shown in Fig 1. A disc brake caliper or housing 1 is to be mounted astraddle of a brake disc 2 on a vehicle axle. The vehicle is preferably but not exclusively a heavy road vehicle, such as a bus, a truck, or a trailer.

An electric motor 3 is attached to the caliper 1. Its drive shaft 4, which may be rotated in either direction by the motor 3, is connected to a coupling 5 of the kind that keeps its outgoing coupling shaft 6 non-rotatable or braked, in a brake release direction, when no current is supplied to the motor 3.

The coupling shaft 6 is provided with a gear 7 in gear engagement with a planet gear 8, which is also in gear engagement with a transmission sleeve 9 to be described below. The planet gear 8 is rotatably arranged on an intermediate gear 10, rotatably arranged in the caliper 1. By this exemplary arrangement the rotational speed of the intermediate gear 10 is reduced in relation to that of the coupling shaft 6. Other reduction arrangements, for example in more than one stage, are possible.

The intermediate gear 10 is in gear engagement with a thrust rod gear 11 of each of two thrust rods 12. The thrust rods 12 have the general function of transforming the ingoing rotational movement of the gear 11 into an outgoing linear movement of a part connected to a first disc brake pad 13 at one side of the brake disc 2. At the other side of the brake disc 2 there is a second disc brake pad 14 connected to the caliper 1, which in this case is of the so called floating type, i e it is mounted for certain movements perpendicularly to the disc 2. The caliper may, however, equally well be of the fixed type.

With the briefly described design the first disc brake pad 13 will be applied against the brake disc 2, when the motor 3 is rotated in its application direction. At a motor rotation in the opposite direction the disc brake pad 13 will be withdrawn from the brake disc 2.

The transmission sleeve 9 is rotatable in the caliper 1 and is provided with a sleeve arm 9' extending out of the caliper 1 trough a slot 1' having an end shoulder 1", against which the sleeve arm 9' is shown to be resting in Fig 2.

An elasticity spring 15 fixedly supported to the left in Fig 2 (in a way not shown) exerts a bias to the right on the sleeve arm 9*'*.

A locking rod 16 axially movably arranged in the caliper 1 is arranged for locking cooperation with a corresponding opening 9" in the transmission sleeve 9. The locking rod 16 is brought into engagement with the opening 9" by an electromagnet 17 when energized and biased by a compression spring 18 in the return direction.

### First service brake application

Initially, for example after the installation of new brake pads 13 and 14, the locking rod 16 is out of engagement with the transmission sleeve 9 and the elasticity spring 15 is released, so that the transmission sleeve is rotatably biased to the right in Fig 2.

The disc brake is applied in a normal way by rotation of the electric motor 3 in its application direction. During this application the electromagnet 17 is energized, so that the locking rod 16 strives for getting into engagement with the transmission sleeve 9.

When the brake force reaches a level corresponding to the bias of the elasticity spring 15, the spring is compressed, and the transmission sleeve 9 is rotated, until the sleeve arm 9' engages the slot shoulder 1" and the locking rod 16 engages the transmission sleeve 9.

At a subsequent release of the brake to a force below the bias of the elasticity spring 15, the locking rod 16 will be clamped in an engaged position in the transmission sleeve 9, which means that the engaged, shown position will remain even at a current loss for the brake system.

### Normal brake operation

In normal operation the different parts are in the positions shown in Figs 1 and 2 with the electromagnet 17 energized and the locking rod 16 in locking engagement with the transmission sleeve 9. Also, the elasticity spring 15 is in a compressed state.

The disc brake is applied and released by rotating the electric motor 3 in either direction (without any influence from the elasticity spring 15, as the transmission sleeve 9 is held stationary).

### Parking brake application

The disc brake is applied by the electric motor 3 to a force which is somewhat higher than the bias of the elasticity spring 15, and the electromagnet 17 is deenergized.

In this situation the compression spring 18 is able to withdraw the locking rod 16 from engagement with the transmission sleeve 9.

The elasticity spring 15 is now in the force transmitting chain. If the parking brake force decreases under the force of the elasticity spring 15, only the elasticity spring will provide the braking force.

The movement of the locking rod 16 can be monitored by the electronics of the brake system, so that it can be verified that the correct force has been attained and that extra elasticity is available. Differently stated, the fact that the locking rod 16 is withdrawn or pulled out (under the bias of the compression spring 18) is a verification that the parking brake functions and that a brake force is available.

### Parking brake release

When the parking brake is to be released the electromagnet 17 is energized. The brake is applied to a force which is somewhat higher than the bias of the elasticity spring 15, and the locking rod 16 engages the the transmission sleeve 9.

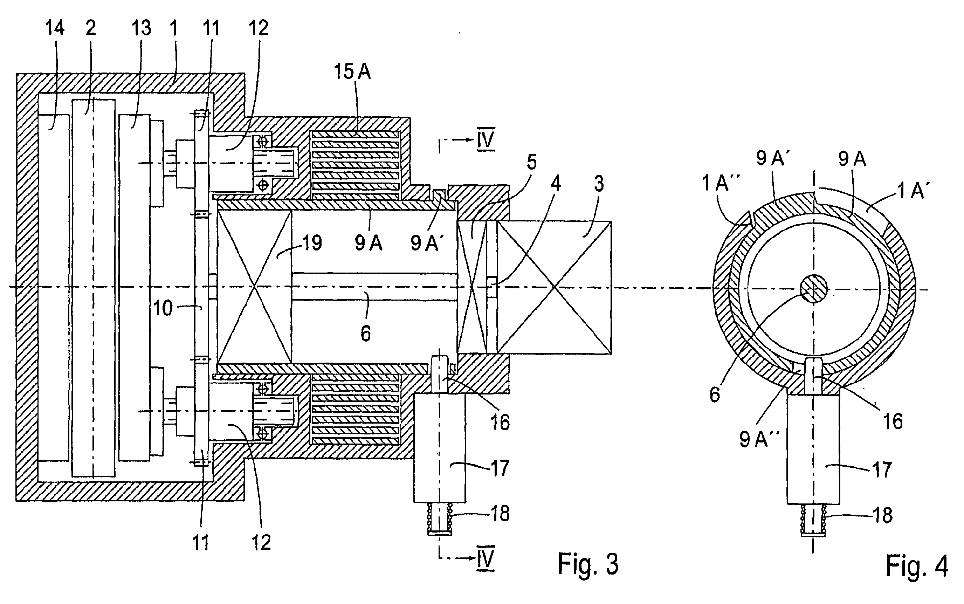

### The second embodiment according to Figs 3 and 4

The main difference between the second and the first embodiments is that the former has an elasticity spring in the form of a clock spring or spiral spring instead of a compression spring.

Parts that are similar in the two embodiments have the same reference numerals. This is true for the disc brake caliper 1, the brake disc 2, the electric motor 3, the drive shaft 4, the coupling 5, the coupling shaft 6, the intermediate gear 10, the trust rod gears 11, the thrust rods 12, the disc brake pads 13 and 14, the locking rod 16, the electromagnet 17, and the compression spring 18.

A modified transmission sleeve is given the reference numeral 9A, and the modified elasticity spring is given the reference numeral 15A.

In this embodiment the rotational speed reduction from the coupling shaft 7 to the intermediate gear 10 is performed by a gear box 19, preferably a planetary gear box, in the transmission sleeve 9A.

The transmission sleeve 9A has a protrusion 9A', extending into a caliper slot 1A' having an end shoulder 1A", and an opening 9A" for the locking pin 16.

The outer end of the elasticity spring 15A is attached to the caliper 1 and the inner end to the transmission sleeve 9A.

The function of the brake according to the second embodiment is the same as that of the first embodiment, and the description thereof is not repeated.

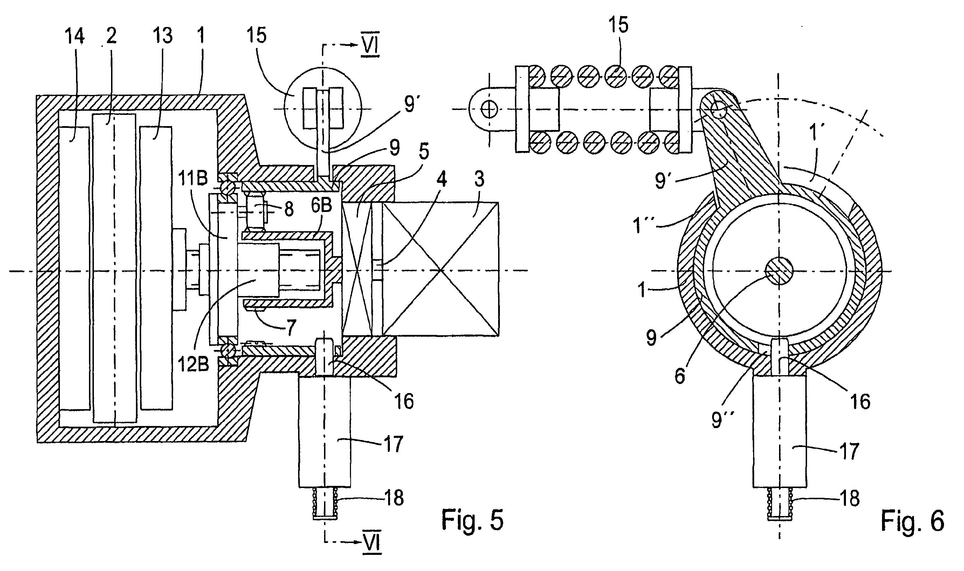

### The third embodiment according to Figs 5 and 6

The third embodiment according to Figs 5 and 6 has closest similarities with the first embodiment.The principal difference in relation thereto is that the third embodiment has only one thrust rod instead of two.

Again, parts that are similar in these two embodiments have the same numerals. This is true for the brake caliper 1, the brake disc 2, the electric motor 3, the drive shaft 4, the coupling 5, the gear 7, the planet gear 8, the disc brake pads 13 and 14, the elasticity spring 15, the locking pin 16, the electromagnet 17, and the compression spring 18.

The planet gear 8 is rotatably arranged on a thust rod ring 11B (journalled in the caliper 1) of the single thrust rod 12B. The coupling shaft 6B with the gear 7 is sleeve-shaped in order to accomodate the thrust rod 12B.

The function of this embodiment is the same as that of the first embodiment.

An alternative function of the arrangement is to have the elasticity spring 15; 15A locked in unloaded state at service brake application of the brake. At a parking brake application the unlocked elasticity spring is loaded by the electric motor 3 and used for parking brake application.

Modifications are possible within the scope of the appended claims. It would for example be possible to make use of the basic thought behind the invention not only for a disc brake but also for a drum or block brake, and the invention is not limited to brakes for heavy road vehicles.

## Claims

1. A parking brake arrangement in an electrically operated brake, in which a service brake function is performed by a rotary movement of an electric motor (3), transformed into a translational brake applying movement, wherein the parking brake function is performed by a separate elasticity spring (15; 15A) so arranged in the force transmitting chain of the brake that its elasticity is in series with the elasticity of the brake and adapted to provide a rotary parking brake force.

2. An arrangement according to claim 1, **characterized in that** the elasticity spring (15; 15A) is loaded at a service brake application of the brake and then locked until released for parking brake application.

3. An arrangement according to claim 1, **characterized in that** the elasticity spring (15; 15A) at service brake application of the brake is locked in unloaded state and at parking brake application is loaded by the electric motor (3) and used for parking brake application.

4. An arrangement according to claim 1, **characterized in that** a transmission sleeve (9; 9A) rotatably biased by the elasticity spring (15; 15A) is rotatably arranged in the rotary force transmitting chain of the brake and is held to a non-rotatable part of the brake at service braking but is disengaged therefrom-at parking braking.

5. An arrangement according to claim 4, **characterized in that** the transmission sleeve (9; 9A) is rotatably arranged in the housing (1) of the brake and is held to the housing at service braking.

6. An arrangement according to claim 4, **characterized by** an electrically activated locking device (16) for the transmission sleeve (9; 9A).

7. An arrangement according to claim 6, **characterized by** a locking rod (16), which is arranged in the housing (1) for engagement with the transmission sleeve (9; 9A) by means of an electromagnet (17) and disengagement therefrom by means of a compression spring (18).

8. An arrangement according to any of claims 1-7, **characterized in that** the elasticity spring is a compression spring (15) connected to the transmission sleeve (9) by means of a sleeve arm (9')*.*

9. An arrangement according to any of claims 1-7, **characterized in that** the elasticity spring is a clock spring or spiral spring (15A) arranged in the housing (1) with its outer end attached to the housing and its inner end attached to the transmission sleeve (9A).

10. An arrangement according to claim 4, **characterized by** means for monitoring the movement of the locking rod (16) so as to verify the function of the arrangement.

## Patentansprüche

1. Eine Feststellbremsenanordnung in einer elektrisch betriebenen Bremse, in welcher eine Betriebsbremsenfunktionalität durch eine drehende Bewegung eines elektrischen Motors (3) durchgeführt wird, welche in eine translatorische Bremsenanwendungsbewegung transformiert wird, wobei die Feststellbremsenfunktion durch eine separate Elastizitätsfeder (15; 15a) durchgeführt wird, die in der Kraftübertragungskette der Bremse so angeordnet ist, dass ihre Elastizität mit der Elastizität der Bremse in Reihe ist, und die angepasst ist, eine drehende Feststellbremskraft zu bieten.

2. Anordnung nach Anspruch 1, **dadurch gekennzeichnet, dass** die Elastizitätsfeder (15;15a) bei einer Betriebsbremsenanwendung der Bremse gespannt und dann gesperrt ist, bis sie zur Feststellbremsenanwendung gelöst wird.

3. Anordnung nach Anspruch 1, **dadurch gekennzeichnet, dass** die Elastizitätsfeder (15; 15a) bei einer Betriebsbremsenanwendung der Bremse in einem ungespannten Zustand gesperrt ist und bei einer Feststellbremsenanwendung durch den elektrischen Motor (3) gespannt und zur Feststellbremsenanwendung verwendet wird.

4. Anordnung nach Anspruch 1, **dadurch gekennzeichnet, dass** eine Übertragungsmuffe (9; 9a), welche durch die Elastizitätsfeder (15; 15a) drehbar vorgespannt ist, drehbar in der drehenden Kraftübertragungskette der Bremse angeordnet ist und an einen nicht-drehbaren Teil der Bremse beim Betriebsbremsen gehalten wird, aber beim Feststellbremsen davon gelöst wird.

5. Anordnung nach Anspruch 4, **dadurch gekennzeichnet, dass** die Übergangsmuffe (9; 9a) in dem Gehäuse (1) der Bremse drehbar angeordnet ist und beim Betriebsbremsen an dem Gehäuse gehalten wird.

6. Anordnung nach Anspruch 4, **gekennzeichnet durch** eine elektrisch aktivierte Sperrvorrichtung (16) für die Übergangsmuffe (9; 9a).

7. Anordnung nach Anspruch 6, **gekennzeichnet durch** einen Sperrstab (16), der in dem Gehäuse (1) zum Zusammenwirken mit der Übergangsmuffe (9;9a) mittels eines Elektromagneten (17) und zum Lösen davon mittels einer Kompressionsfeder (18) angeordnet ist.

8. Anordnung nach einem der Ansprüche 1 bis 7, **dadurch gekennzeichnet, dass** die Elastizitätsfeder eine Kompressionsfeder (15) ist, die mit der Übergangsmuffe (9) mittels eines Muffenarms (9') verbunden ist.

9. Anordnung nach einem der Ansprüche 1 bis 7, **dadurch gekennzeichnet, dass** die Elastizitätsfeder eine Uhrfeder oder eine Spiralfeder (15a) ist, die in dem Gehäuse (1) mit ihrem äußeren Ende an dem Gehäuse befestigt und ihrem inneren Ende an der Übertragungsmuffe (9a) befestigt angeordnet ist.

10. Anordnung gemäß Anspruch 4, **gekennzeichnet durch** eine Einrichtung zum Überwachen der Bewegung des Sperrstabs (16), um die Funktion der Anordnung zu verifizieren.

## Revendications

1. Agencement de frein de stationnement dans un frein à commande électrique, dans lequel une fonction de frein de service est exécutée par un mouvement tournant d'un moteur électrique (3), transformé en un mouvement de translation de serrage du frein, dans lequel la fonction de frein de stationnement est exécutée par un ressort élastique séparé (15 ; 15A) agencé dans la chaîne de transmission de force du frein de façon que son élasticité soit en série avec l'élasticité du frein, et conçu pour produire une force tournante de frein de stationnement.

2. Agencement selon la revendication 1, **caractérisé en ce que** le ressort élastique (15 ; 15A) est chargé dans une application en frein de service du frein puis est bloqué jusqu'à ce qu'il soit libéré pour une application en frein de stationnement.

3. Agencement selon la revendication 1, **caractérisé en ce que** le ressort élastique (15 ; 15A), lors d'une application en frein de service du frein, est bloqué dans un état déchargé et, lors d'une application en frein de stationnement, est chargé par le moteur électrique (3) et utilisé pour une application en frein de stationnement.

4. Agencement selon la revendication 1, **caractérisé en ce qu'**un manchon (9 ; 9A) de transmission sollicité en rotation par le ressort élastique (15 ; 15A) est agencé de façon à pouvoir tourner dans la chaîne de transmission de force de rotation du frein et est maintenu sur une partie ne pouvant pas tourner du frein lors d'un freinage de service, mais en est dégagé lors d'un freinage de stationnement.

5. Agencement selon la revendication 4, **caractérisé en ce que** le manchon de transmission (9 ; 9A) est agencé de façon à pouvoir tourner dans le boîtier (1) du frein et est maintenu sur le boîtier lors d'un freinage de service.

6. Agencement selon la revendication 4, **caractérisé par** un dispositif de blocage activé électriquement (16) pour le manchon de transmission (9 ; 9A).

7. Agencement selon la revendication 6, **caractérisé par** une tige de blocage (16), qui est agencée dans le boîtier (1) pour entrer en prise avec le manchon de transmission (9 ; 9A) au moyen d'un électroaimant (17) et s'en dégager au moyen d'un ressort de compression (18).

8. Agencement selon l'une quelconque des revendications 1 à 7, **caractérisé en ce que** le ressort élastique est un ressort de compression (15) relié au manchon de transmission (9) au moyen d'un bras (9') du manchon.

9. Agencement selon l'une quelconque des revendications 1 à 7, **caractérisé en ce que** le ressort élastique est un ressort d'horloge ou un ressort spirale (15A) agencé dans le boîtier (1) de façon que son extrémité extérieure soit attachée au boîtier et son extrémité intérieure attachée au manchon (9A) de transmission.

10. Agencement selon la revendication. 4, **caractérisé par** un moyen destiné à contrôler le mouvement de la tige de blocage (16) afin de vérifier le fonctionnement de l'agencement.
